# FASCICULE DE BREVET EUROPEEN

(11) **EP 4 080 318 B1**
(45) Date de publication et mention de la délivrance du brevet: **25.11.2026**
(21) Numéro de dépôt: 22169074.6
(22) Date de dépôt: 20.04.2022
(51) Int. Cl.: G05G 9/047, G05G 1/04, G05G 5/05, B64C 13/04, H01H 23/30, B64D 31/02

(54) **DISPOSITIF DE COMMANDE D'UN ENSEMBLE DE RÉDUCTION D ÉNERGIE MÉCANIQUE D'UN AÉRONEF ET PROCÉDÉ ASSOCIÉ**
STEUERVORRICHTUNG FÜR EINE EINHEIT ZUR REDUZIERUNG DER MECHANISCHEN ENERGIE EINES LUFTFAHRZEUGS UND ENTSPRECHENDES VERFAHREN
DEVICE FOR CONTROLLING AN ASSEMBLY FOR REDUCING MECHANICAL ENERGY OF AN AIRCRAFT AND ASSOCIATED METHOD

(30) Priorité: 21.04.2021 FR 2104147
(43) Date de publication de la demande: 26.10.2022
(73) Titulaire: Dassault Aviation, 92210 Saint-Cloud (FR)
(72) Inventeur: LE BORLOCH, Jérôme, 92214 SAINT CLOUD (FR); PINEAU, François, 92214 SAINT CLOUD (FR)
(74) Mandataire: Lavoix

(56) Documents cités:
- DE-A1- 102004 052 757
- DE-A1- 3 626 898
- US-A- 3 358 949
- US-A1- 2017 017 257
- US-A1- 2019 152 623
- US-A1- 2019 189 373
- US-B2- 10 836 501

## Description

La présente invention concerne un dispositif de commande d'un ensemble de réduction d'énergie mécanique d'un aéronef.

L'ensemble de réduction d'énergie mécanique comprend au moins un organe de réduction d'énergie mécanique, par exemple, au moins un aérofrein déployable à partir d'une surface de l'aéronef pour augmenter la trainée de l'aéronef.

Un tel dispositif de commande permet à un pilote et/ou à un copilote de l'aéronef de réduire l'énergie mécanique d'un aéronef, par exemple, lors d'une phase d'approche d'une piste d'atterrissage ou encore lors de l'atterrissage. L'ensemble de réduction d'énergie mécanique réduit l'énergie mécanique de l'aéronef, ou en d'autres termes freine l'aéronef, en augmentant sa trainée.

Il est connu de l'état de la technique qu'un tel dispositif de commande se trouve sous la forme d'un levier dédié déplaçable entre plusieurs positions prédéfinies chacune représentative d'un agencement particulier de l'ensemble de réduction d'énergie mécanique et donc d'une réduction spécifique de l'énergie mécanique.

Généralement, un tel levier est disposé sur le pylône central au sein du cockpit pour pouvoir être manipulé par un pilote et/ou un copilote et pour être dans leur champ de vision. En effet, outre sa fonction de contrôle de l'ensemble de réduction d'énergie mécanique, la position du levier offre au pilote et au copilote une indication sur l'état actuel de la commande de réduction d'énergie mécanique générée via le levier.

Toutefois, lors de phases de vol à charge de travail élevée, le pilote et le copilote doivent avoir un contrôle précis et simultané sur différents paramètres de l'aéronef, lesdits paramètres comprenant notamment le freinage de l'aéronef par l'ensemble de réduction d'énergie mécanique. Il est donc nécessaire que le pilote et le copilote manipulent une multitude d'instruments simultanément, y compris le levier dédié au contrôle dudit ensemble de réduction d'énergie mécanique. Ces instruments pouvant être dispersés au sein du cockpit, ceci complexifie les procédures.

En outre, il est également connu de l'état de la technique que, lorsque souhaité par le pilote et le copilote, l'ensemble de réduction d'énergie mécanique soit contrôlable automatiquement par des fonctions automatiques de l'aéronef. Ces fonctions automatiques agissent, par exemple, en superposition des actions manuelles de l'équipage sur le levier et indépendamment du levier, pour commander automatiquement l'ensemble de réduction d'énergie mécanique.

Toutefois, lorsque la configuration de l'ensemble de réduction d'énergie mécanique est modifiée par les fonctions automatiques, cela induit une incohérence entre la configuration adoptée par l'ensemble de réduction d'énergie mécanique et la position du levier. Ainsi, ceci peut induire en erreur le pilote et le copilote quant à la réelle configuration courante de l'ensemble de réduction d'énergie mécanique.

US 2019/152623 A1 divulgue un système d'actionnement des gouvernes d'un aéronef.

Un but de l'invention est de pallier ces inconvénients en proposant un dispositif de commande permettant un pilotage précis et sûr de l'aéronef lors des phases d'approches ou lors de l'atterrissage.

À cet effet, l'invention a pour objet un dispositif de commande selon la revendication 1.

Le dispositif de commande selon l'invention peut comprendre l'une ou plusieurs des caractéristiques des revendications 2 à 7, prise(s) isolément ou suivant toute combinaison techniquement envisageable.

L'invention a également pour objet un système de pilotage selon la revendication 8.

Le système de pilotage selon l'invention peut comprendre l'une ou plusieurs des caractéristiques des revendications 9 à 12, prise(s) isolément ou suivant toute combinaison techniquement envisageable

Le système de pilotage selon l'invention peut également comprendre l'une ou plusieurs des caractéristiques suivantes, prise(s) isolément ou suivant toute combinaison techniquement envisageable :
- le dispositif de contrôle est destiné à être disposé dans un cockpit de l'aéronef ;
- le dispositif de commande est destiné à être disposé dans le cockpit de l'aéronef ;
- le dispositif de commande est monté sur le dispositif de contrôle.

L'invention concerne également un aéronef selon la revendication 13.

L'invention concerne, en outre, un procédé de commande d'un ensemble de réduction d'énergie mécanique d'un aéronef, selon la revendication 14.

Le procédé selon l'invention peut comprendre l'une ou plusieurs des caractéristiques des revendications 15 et 16, prise(s) isolément ou suivant toute combinaison techniquement envisageable.

L'invention sera mieux comprise à la lecture de la description qui va suivre donnée uniquement à titre d'exemple, et faite en se référant aux dessins annexés, sur lesquels :
- la figure 1 est une vue en perspective d'un système de pilotage selon l'invention ;
- la figure 2 est une représentation en vue de côté du dispositif de commande du système de pilotage de la figure 1, le bouton à bascule étant en position de maintien ;
- la figure 3 est une représentation en vue de côté du dispositif de commande de la figure 2, le bouton à bascule étant dans la première position de déplacement intégral ;
- la figure 4 est une représentation du dispositif d'affichage du système de pilotage de la figure 1.

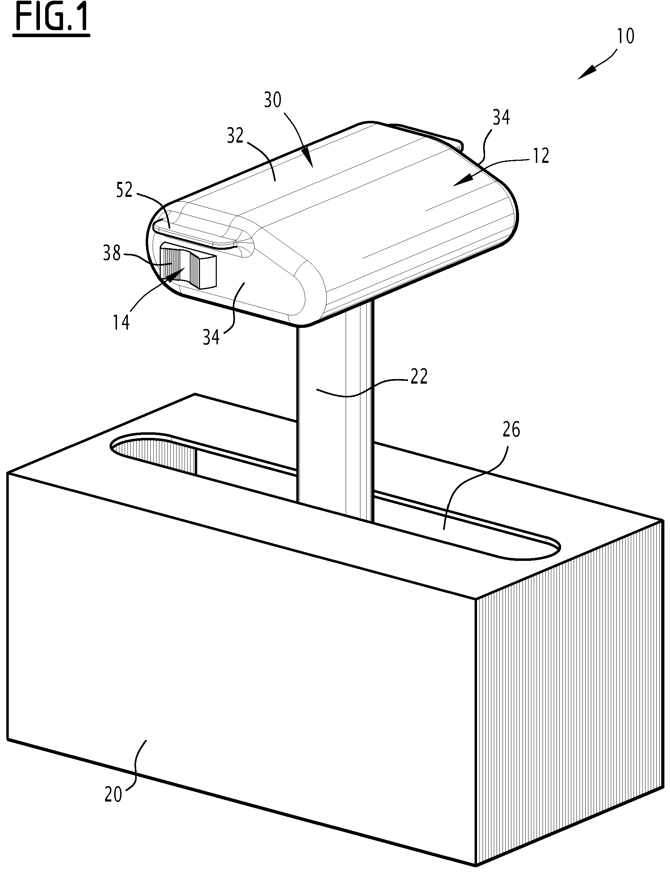

Un dispositif de contrôle 12 d'un ensemble de réduction d'énergie mécanique d'un aéronef va être décrit, en regard des figures 1 à 4.

L'aéronef comprend au moins un moteur de propulsion, l'ensemble de réduction d'énergie mécanique de l'aéronef et un système 10 de pilotage du moteur de propulsion et de l'ensemble de réduction d'énergie mécanique.

Le ou chaque moteur de propulsion est propre à être piloté par le système de pilotage 10 pour faire évoluer une force de poussée sur l'aéronef.

L'ensemble de réduction d'énergie mécanique est un ensemble configuré pour réduire l'énergie mécanique de l'aéronef, par exemple en modifiant la trainée de l'aéronef. L'ensemble de réduction d'énergie mécanique est propre à être piloté par le système de pilotage 10. Il est déplaçable entre une configuration inactive et une configuration de réduction maximale de l'énergie mécanique.

Par exemple, l'ensemble de réduction d'énergie mécanique comprend au moins un organe de réduction d'énergie mécanique, par exemple, au moins un aérofrein déplaçable entre une position rentrée dans laquelle il est contenu dans le gabarit de l'aéronef et une position sortie dans laquelle l'aérofrein s'étend sensiblement en saillie hors du gabarit de l'aéronef.

Avantageusement, l'ensemble de réduction d'énergie mécanique comprend plusieurs organes de réduction d'énergie mécanique. Les organes de réduction d'énergie mécanique sont, par exemple, un aérofrein et/ou un flaperon, Les organes de réduction d'énergie mécanique sont, par exemple, situés sur une voilure, un empennage et/ou un fuselage de l'aéronef.

Dans sa position rentrée, le ou chaque organe de réduction d'énergie mécanique n'influe pas sur l'énergie mécanique de l'aéronef. Dans la position sortie, le ou chaque organe réduit l'énergie mécanique de l'aéronef en s'opposant à l'écoulement d'air autour de l'aéronef. En particulier, le ou chaque organe de réduction d'énergie mécanique est déplaçable entre la position rentrée et une position sortie extrême. Ainsi, le ou chaque organe de réduction d'énergie mécanique présente une dimension, par exemple une hauteur, s'étendant continûment hors du gabarit comprise entre zéro (correspondant à la position rentrée) et une dimension maximale (correspondant à la position sortie extrême).

Avantageusement, dans la configuration inactive, le ou chaque organe de réduction d'énergie mécanique est dans la position rentrée et dans la configuration de réduction maximale d'énergie mécanique, le ou chaque organe de réduction d'énergie mécanique est dans la position sortie extrême.

Dans cet exemple, le ou chaque organe de réduction d'énergie mécanique est configuré pour atteindre une multitude de positions intermédiaires de manière continue entre la position rentrée et la position sortie extrême. Ainsi, lorsque l'organe de réduction est monté pivotant autour d'un axe entre la position rentrée et la position sortie extrême, il est possible de piloter deux positions successives du ou de chaque organe de réduction d'énergie mécanique avec un incrément d'angle inférieur à 1°.

Ainsi, l'ensemble de réduction d'énergie mécanique est configuré pour atteindre une multitude de configurations intermédiaires de manière continue entre la configuration inactive et la configuration de réduction maximale de l'énergie mécanique. Dans chaque configuration intermédiaire, le ou chaque organe de réduction d'énergie mécanique occupe une position intermédiaire correspondante.

Dans la suite, par soucis de concision, un seul organe de réduction d'énergie mécanique sera décrit. Il faut toutefois comprendre que la description s'applique également pour chaque organe de réduction d'énergie mécanique de l'ensemble de réduction d'énergie mécanique, lorsque l'ensemble de réduction d'énergie mécanique comprend plusieurs organes.

Le système de pilotage 10 comprend un dispositif 12 de contrôle du ou de chaque moteur de propulsion, un dispositif 14 de commande de l'ensemble de réduction d'énergie mécanique, des capteurs d'une situation de l'ensemble de réduction d'énergie mécanique et un dispositif d'affichage 16.

Le dispositif de contrôle 12 est configuré pour piloter le ou chaque moteur de propulsion. Par exemple, le dispositif de contrôle 12 est destiné à être disposé dans un cockpit de l'aéronef. En référence à la figure 1, le dispositif de contrôle 12 comprend un support 20, destiné à être fixé dans le cockpit de l'aéronef et une manette 22 montée mobile sur le support 20.

Le support 20 est propre à être placé, de préférence, entre des sièges du cockpit, dans le pylône central.

Le support 20 présente une glissière 26 longitudinale pour le guidage du déplacement de la manette 22.

La manette 22 s'étend dans la glissière 26 et est déplaçable longitudinalement pour piloter le ou chaque moteur de propulsion. En variante, la manette 22 est déplaçable dans la glissière 26 en rotation autour d'un axe de rotation perpendiculaire à la glissière 26.

La manette 22 comprend un élément de préhension 30 comportant une surface supérieure de préhension 32 galbée, destinée à être en contact d'une paume de la main d'un pilote ou d'un copilote, et deux surfaces latérales 34 opposées s'étendant de part et d'autre de la surface de préhension 32 et sensiblement orthogonalement à la surface de préhension 32.

L'élément de préhension 30 est destiné à être manipulé par le pilote, ou le cas échéant le copilote, pour déplacer la manette 22 longitudinalement dans la glissière 26. La position longitudinale de la manette 22 détermine un ordre de commande de la poussée des moteurs ou/et de la variation d'énergie mécanique souhaitée de l'aéronef, comme décrit dans FR 3 058 805. Dans ce dernier cas, le déplacement de la manette 22 dans la glissière 26 est également apte à piloter l'ensemble de réduction d'énergie mécanique.

Avantageusement, le dispositif de commande 14 est destiné à être disposé dans le cockpit de l'aéronef. Par exemple, le dispositif de commande 14 est monté sur le dispositif de contrôle 12.

Le dispositif de commande 14 comprend un bouton à bascule 38, avantageusement déplaçable entre au moins trois positions, encore avantageusement au moins cinq positions comme il sera décrit dans cet exemple, et un élément de rappel 40 en position du bouton à bascule 38.

Optionnellement, le dispositif de commande 14 comprend, en outre, deux marches d'effort du bouton à bascule 38.

Avantageusement, le dispositif de commande 14 comprend une centrale de commande (non représentée) de l'ensemble de réduction d'énergie mécanique, un interrupteur de neutre et deux interrupteurs de déplacement 44, 48. Lorsque le bouton à bascule 38 est déplaçable entre au moins cinq positions, le dispositif de commande 14 comprend deux interrupteurs de déplacement supplémentaires 46, 50.

Avantageusement, le dispositif de commande 14 comprend en outre une casquette 52 de protection du bouton à bascule 38 destinée à empêcher les actions intempestives sur le bouton à bascule 38.

Dans cet exemple, le bouton à bascule 38 est placé sur une des surfaces latérales 34 pour être facilement actionnable par le pouce d'un pilote mettant sa main droite sur la surface de préhension 32.

De préférence, le dispositif de commande 14 comprend un bouton à bascule auxiliaire et un élément de rappel auxiliaire identiques respectivement au bouton à bascule 38 et à l'élément de rappel 40. Le bouton à bascule auxiliaire est placé sur l'autre des surfaces latérales 34 pour être facilement actionnable par le pouce d'un pilote mettant sa main gauche sur la surface de préhension 32. Le dispositif de commande 14 comprend alors deux marches d'efforts auxiliaires du bouton à bascule auxiliaire, un interrupteur de neutre auxiliaire, quatre interrupteurs de déplacement auxiliaire et une casquette auxiliaire identiques respectivement aux marches d'efforts, interrupteur de neutre, interrupteurs de déplacement et casquette. Les relations entre les éléments auxiliaires énumérés ci-dessus sont identiques à celles entre les éléments décrits en détails ci-dessous.

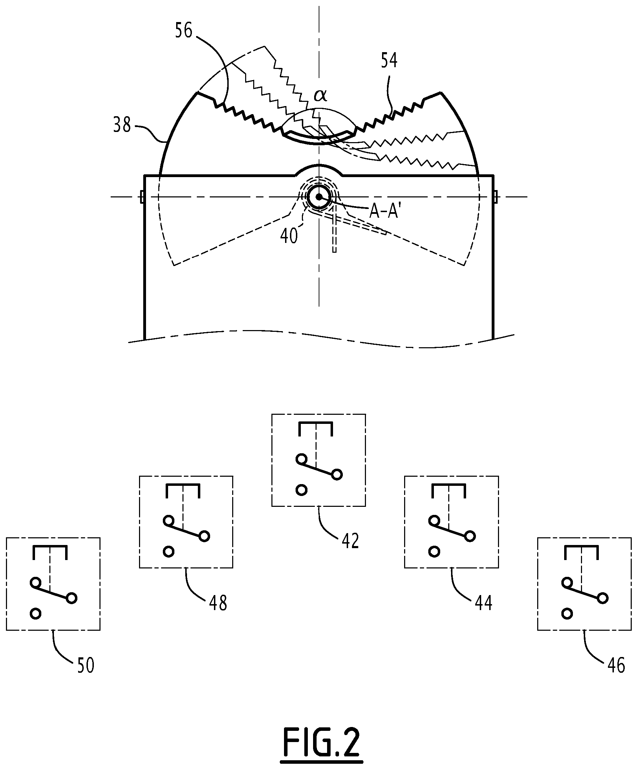

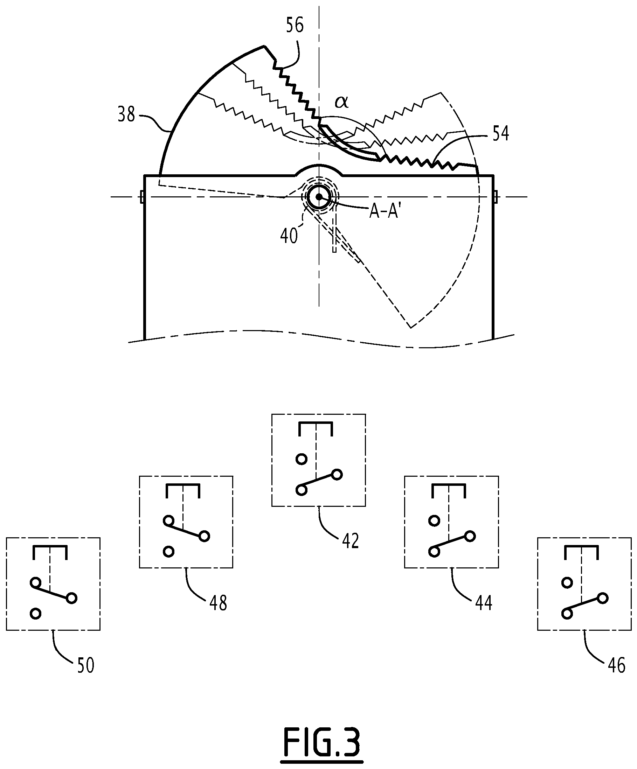

Le bouton à bascule 38 est déplaçable entre une position de maintien (visible en traits gras sur la figure 2 et en traits fins sur la figure 3) de la configuration de l'ensemble de réduction d'énergie mécanique, une première position de déplacement incrémental (visible en traits fins sur la figure 2 et sur la figure 3) de ensemble de réduction d'énergie mécanique vers sa configuration de réduction maximale d'énergie mécanique et une deuxième position de déplacement incrémental (non-illustrée) de l'ensemble de réduction d'énergie mécanique vers sa configuration inactive.

Optionnellement, le bouton à bascule 38 est déplaçable entre la première position de déplacement incrémental et une première position de déplacement intégral (visible en traits fins sur la figure 2 et en traits gras sur la figure 3) de l'ensemble de réduction d'énergie mécanique jusqu'à sa configuration de réduction maximale de l'énergie mécanique, et entre la deuxième position de déplacement incrémental et une deuxième position de déplacement intégral (non-illustrée) de l'ensemble de réduction d'énergie mécanique jusqu'à sa configuration inactive.

La première position de déplacement incrémental est située entre la position de maintien et la première position de déplacement intégral. La deuxième position de déplacement incrémental est située entre la position de maintien et la deuxième position de déplacement intégral.

La deuxième position de déplacement incrémental est symétrique de la première position de déplacement incrémental par rapport à la position de maintien. La deuxième position de déplacement intégral est symétrique de la deuxième position de déplacement intégral par rapport à la position de maintien.

En référence aux figures 2 et 3, le bouton à bascule 38 est mobile en rotation autour d'un axe de rotation A-A', ici parallèle à l'axe de la manette 22, entre la position de maintien, la première position de déplacement incrémental, la deuxième position de déplacement incrémental et, le cas échéant, la première position de déplacement intégral et la deuxième position de déplacement intégral.

Par exemple, le bouton à bascule 38 comprend une première surface d'appui 54 et une deuxième surface d'appui 56.

Les première et deuxième surfaces d'appui 54, 56 s'étendent respectivement dans deux plans formant un angle α entre eux, chacun de ses plans étant sensiblement parallèle à l'axe de rotation A-A'.

La première surface d'appui 54 est destinée à être appuyée pour déplacer le bouton à bascule 38 vers la première position de déplacement incrémental et/ou la première position de déplacement intégral.

La deuxième surface d'appui 56 est destinée à être appuyée pour déplacer le bouton à bascule 38 vers la deuxième position de déplacement incrémental et/ou la deuxième position de déplacement intégral.

Comme illustré sur l'exemple de la figure 1, le bouton à bascule 38 du dispositif de commande 14 est disposé sur le dispositif de contrôle 12. Par exemple, le bouton à bascule 38 est disposé sur une surface latérale 34 de l'élément de préhension 30 de la manette des gaz 22 de sorte à être accessible par un pouce du pilote.

Par exemple, le bouton à bascule auxiliaire est disposé sur la surface latérale 34 opposée à la surface latérale 34 sur laquelle est disposé le bouton à bascule 38 de sorte à être accessible par un pouce du copilote.

L'élément de rappel 40 est configuré pour ramener le bouton à bascule 38 vers sa position de maintien, en particulier depuis les positions de déplacement incrémental et le cas échéant également depuis les positions de déplacement intégral.

En particulier, l'élément de rappel 40 est configuré pour exercer une force de rappel sur le bouton à bascule 38, la force de rappel tendant à ramener le bouton à bascule 38 vers la position de maintien, laquelle constitue une position de repos.

Avantageusement, l'élément de rappel 40 est un ressort de torsion. En variante, le dispositif de commande 14 comprend plusieurs éléments de rappel 40, par exemple, des ressorts de compression.

Lorsque le bouton à bascule 38 est dans la première position de déplacement incrémental ou dans la première position de déplacement intégral et qu'aucun appui n'est exercé sur la première surface d'appui 54, l'élément de rappel 40 ramène le bouton à bascule 38 depuis la première position de déplacement incrémental ou depuis la première position de déplacement intégral jusqu'à la position de maintien.

Lorsque le bouton à bascule 38 est dans la deuxième position de déplacement incrémental ou dans la deuxième position de déplacement intégral et qu'aucun appui n'est exercé sur la deuxième surface d'appui 56, l'élément de rappel 40 ramène le bouton à bascule 38 depuis la deuxième position de déplacement incrémental ou depuis la deuxième position de déplacement intégral jusqu'à la position de maintien.

Une marche d'effort est disposée entre la première position de déplacement incrémental et la première position de déplacement intégral. L'autre marche d'effort est disposée entre la deuxième position de déplacement incrémental et la deuxième position de déplacement intégral.

Les marches d'effort nécessitent l'application d'une force d'appui supérieure à un seuil de force sur le bouton à bascule sensible pour l'utilisateur pour déplacer le bouton à bascule 38 entre la première position de déplacement incrémental et la première position de déplacement intégral et entre la deuxième position de déplacement incrémental et la deuxième position de déplacement intégral.

La centrale de commande est connectée électriquement à l'interrupteur de neutre 42 et à chaque interrupteur de déplacement 44, 46, 48, 50. La centrale de commande est propre à piloter l'ensemble de réduction d'énergie mécanique en fonction de la position du bouton à bascule 38, en particulier en fonction de l'état de l'interrupteur de neutre 42 et des interrupteurs de déplacement 44, 46, 48, 50.

L'interrupteur de neutre 42 est configuré pour être ouvert lorsque le bouton à bascule 38 occupe la position de maintien et configuré pour être fermé lorsque le bouton à bascule 38 occupe une position différente de la position de maintien.

Tant que l'interrupteur de neutre 42 est ouvert, la centrale de commande maintient la configuration de l'ensemble de réduction d'énergie mécanique en l'état. Lors d'un dysfonctionnement du dispositif de commande 14, l'interrupteur de neutre 42 reste en position ouverte, ce qui permet d'éviter une commande erronée de l'ensemble de réduction d'énergie mécanique. Ainsi, la configuration de l'ensemble de réduction d'énergie mécanique est maintenue en l'état dans la position de maintien du bouton à bascule 38.

Les interrupteurs de déplacement 44, 46, 48, 50 sont un premier interrupteur de déplacement incrémental 44 associé à la première position de déplacement incrémental, un premier interrupteur de déplacement intégral 46 associé à la première position de déplacement intégral, un deuxième interrupteur de déplacement incrémental 48 associé à la deuxième position de déplacement incrémental et un deuxième interrupteur de déplacement intégral 50 associé à la deuxième position de déplacement intégral.

Le premier interrupteur de déplacement incrémental 44 est configuré pour être fermé dans la première position de déplacement incrémental et dans la première position de déplacement intégral et ouvert sinon.

Le premier interrupteur de déplacement intégral 46 est configuré pour être fermé dans la première position de déplacement intégral et ouvert sinon.

Le deuxième interrupteur de déplacement incrémental 48 est configuré pour être fermé dans la deuxième position de déplacement incrémental et dans la deuxième position de déplacement intégral et ouvert sinon.

Le deuxième interrupteur de déplacement intégral 50 est configuré pour être fermé dans la deuxième position de déplacement intégral et ouvert sinon.

Dans ce qui suit, la logique avec laquelle la centrale de commande pilote l'ensemble de réduction d'énergie mécanique va être décrite. Il est supposé qu'aucun dysfonctionnement n'impacte le dispositif de commande 14 et que, par conséquent, lorsque l'interrupteur de neutre 42 est ouvert, le bouton à bascule 38 occupe la position de maintien et lorsque l'interrupteur de neutre 42 est fermé, le bouton à bascule 38 occupe une position différente de la position de maintien.

Lorsque l'interrupteur de neutre 42 est fermé, lorsque le premier interrupteur de déplacement incrémental 44 est fermé et, le cas échéant, lorsque le premier interrupteur de déplacement intégral 46 est ouvert, la centrale de commande pilote l'ensemble de réduction d'énergie mécanique par incrément d'augmentation de la réduction d'énergie mécanique vers la configuration de réduction maximale d'énergie mécanique.

Par « par incrément », on entend que l'organe de réduction d'énergie mécanique est déplacé progressivement d'un déplacement unitaire à chaque unité de temps vers la position sortie extrême tant que le premier interrupteur de déplacement incrémental 44 est fermé. Ce déplacement unitaire par unité de temps est par exemple inférieur à 30 % de la course de l'organe de réduction mécanique entre la position rentrée et la position sortie extrême.

L'organe de réduction d'énergie mécanique n'est pas contraint par un nombre limité (par exemple inférieur à 10) de positions discrètes séparées entre la position rentrée et la position sortie extrême, mais est apte à occuper toute position intermédiaire résultant de l'incrément de déplacement effectué, correspondant au temps dans lequel le bouton à bascule 38 occupe la première position de déplacement incrémental.

Par exemple, depuis la configuration inactive, l'ensemble de réduction d'énergie mécanique est déplacé jusqu'à la configuration de réduction maximale lorsque l'interrupteur de neutre 42 est fermé et lorsque le premier interrupteur de déplacement incrémental 44 est maintenu fermé pendant un intervalle de temps compris entre 3 secondes et 6 secondes, avantageusement égal à 4 secondes.

Depuis la configuration inactive, lorsque l'interrupteur de neutre 42 est fermé et lorsque le premier interrupteur de déplacement incrémental 44 est maintenu fermé pendant une durée inférieure à l'intervalle de temps, l'ensemble de réduction d'énergie mécanique est placé dans une configuration intermédiaire entre la configuration inactive et la configuration de réduction maximale.

Ainsi, la configuration de l'ensemble de réduction d'énergie mécanique est modifiée par incrément vers la configuration de réduction maximale de l'énergie mécanique tant que le bouton à bascule 38 est maintenu dans la première position de déplacement incrémental.

Au contraire, dès que le bouton à bascule 38 quitte sa première position de déplacement incrémental pour revenir dans la position de maintien, par exemple en conséquence de la force de rappel exercée par l'élément de rappel 40, la commande de position du ou de chaque organe de réduction d'énergie mécanique reste figée, et l'ensemble de réduction d'énergie mécanique s'immobilise dans sa configuration courante.

Lorsque l'interrupteur de neutre 42, le premier interrupteur de déplacement incrémental 44 et le premier interrupteur de déplacement intégral 46 sont fermés, la centrale de commande pilote l'ensemble de réduction d'énergie mécanique intégralement jusqu'à la configuration de réduction maximale d'énergie mécanique.

Par « intégralement », on entend que l'ensemble de réduction d'énergie mécanique est déplacé jusqu'à la configuration de réduction maximale quelle que soit la durée pendant laquelle le premier interrupteur de déplacement intégral 46 est fermé.

Ainsi, la configuration de l'ensemble de réduction d'énergie mécanique est modifiée intégralement jusqu'à la configuration de réduction maximale de l'énergie mécanique dès que le bouton à bascule 38 est dans la première position de déplacement intégral.

Lorsque l'interrupteur de neutre 42 est fermé, lorsque le deuxième interrupteur de déplacement incrémental 48 est fermé et, le cas échéant, lorsque le deuxième interrupteur de déplacement intégral 50 est ouvert, la centrale de commande pilote l'ensemble de réduction d'énergie mécanique par incrément de diminution de la réduction d'énergie mécanique vers la configuration inactive.

Par « incrément », on entend que, l'organe de réduction d'énergie mécanique est déplacé progressivement du déplacement unitaire à chaque unité de temps vers la position rentrée tant que le deuxième interrupteur de déplacement incrémental 48 est fermé.

Comme précédemment, l'organe de réduction d'énergie mécanique n'est pas contraint par un nombre limité (par exemple inférieur à 10) de positions discrètes séparées entre la position sortie extrême et la position rentrée, mais est apte à occuper toute position intermédiaire résultant de l'incrément de déplacement effectué, correspondant au temps dans lequel le bouton à bascule 38 occupe la deuxième position de déplacement incrémental.

Par exemple, depuis la configuration de réduction maximale de l'énergie mécanique, l'ensemble de réduction d'énergie mécanique est déplacé jusqu'à la configuration inactive lorsque l'interrupteur de neutre 42 est fermé et lorsque le deuxième interrupteur de déplacement incrémental 48 est maintenu fermé pendant un intervalle de temps compris entre 3 secondes et 6 secondes, avantageusement égal à 4 secondes.

Depuis la configuration de réduction maximale, lorsque l'interrupteur de neutre 42 est fermé et lorsque le deuxième interrupteur de déplacement incrémental 48 est maintenu fermé pendant une durée inférieure à l'intervalle de temps, l'ensemble de réduction d'énergie mécanique est placé dans une configuration intermédiaire entre la configuration inactive et la configuration de réduction maximale.

Ainsi, la configuration de l'ensemble de réduction d'énergie mécanique est modifiée par incrément vers la configuration inactive tant que le bouton à bascule 38 est maintenu dans la deuxième position de déplacement incrémental.

Dès que le bouton à bascule 38 quitte sa deuxième position de déplacement incrémental pour revenir dans la position de maintien, par exemple en conséquence de la force de rappel exercée par l'élément de rappel 40, la commande de position du ou de chaque organe de réduction d'énergie mécanique reste figée, et l'ensemble de réduction d'énergie mécanique s'immobilise dans sa configuration courante.

Lorsque l'interrupteur de neutre 42, le deuxième interrupteur de déplacement incrémental 48 et le deuxième interrupteur de déplacement intégral 50 sont fermés, la centrale de commande pilote l'ensemble de réduction d'énergie mécanique intégralement jusqu'à la configuration inactive.

Par « intégralement », on entend que l'ensemble de réduction d'énergie mécanique est déplacé jusqu'à la configuration inactive quelle que soit la durée pendant laquelle le deuxième interrupteur de déplacement intégral 50 est fermé.

Ainsi, la configuration de l'ensemble de réduction d'énergie mécanique est modifiée intégralement jusqu'à la configuration inactive dès que le bouton à bascule 38 est dans la deuxième position de déplacement intégral.

Lorsque le bouton à bascule 38 est entre la position de maintien et une position de déplacement incrémental ou entre une position de déplacement incrémental et une position de déplacement intégral, la centrale de commande ne réalise aucun pilotage de l'ensemble de réduction d'énergie mécanique.

Avantageusement, la centrale de commande est en outre configurée pour générer des données relatives à une commande courante de l'ensemble de réduction d'énergie mécanique. La commande courante correspond au pilotage courant de l'ensemble de réduction d'énergie mécanique.

En référence à la figure 1, la casquette de protection 52 fait saillie latéralement par rapport à la surface latérale 34 de l'élément de préhension 30 de la manette des gaz 22 sur laquelle est disposée le bouton à bascule 38 et s'étend au moins en partie autour du bouton à bascule 38.

Ainsi, le bouton à bascule 38 est couvert au moins partiellement verticalement par la casquette de protection 52. Ceci réduit le risque d'un déplacement inopiné du bouton à bascule 38.

La casquette de protection auxiliaire fait saillie latéralement par rapport à la surface latérale 34 opposée et s'étend au moins en partie autour du bouton à bascule auxiliaire.

Les capteurs de la situation de l'ensemble de réduction d'énergie mécanique sont configurés pour déterminer la configuration courante de l'ensemble de réduction d'énergie mécanique et générer des données relatives à ladite configuration courante. Par exemple, pour ce faire, lesdits capteurs sont configurés pour déterminer la position de l'organe de réduction d'énergie mécanique.

Le dispositif d'affichage 16 est connecté aux capteurs et/ou à la centrale de commande. Le dispositif d'affichage 16 est configuré pour recevoir depuis les capteurs les données relatives à la configuration courante de l'ensemble de réduction d'énergie mécanique et/ou pour recevoir depuis la centrale de commande les données relatives à la commande courante de l'ensemble de réduction d'énergie mécanique.

Le dispositif d'affichage 16 est configuré pour afficher, à destination d'un pilote et/ou d'un copilote, les données relatives à la configuration courante de l'ensemble de réduction d'énergie mécanique et/ou les données relatives à la commande courante de l'ensemble de réduction d'énergie mécanique. De la sorte, le personnel navigant technique a une visualisation de la configuration actuelle de l'ensemble de réduction d'énergie mécanique et/ou de la commande actuelle de l'ensemble de réduction d'énergie mécanique. Par exemple, le dispositif d'affichage 16 comprend un écran tête basse ou un afficheur tête haute.

Les données relatives à la configuration courante et/ou à la commande courante de l'ensemble de réduction d'énergie mécanique sont par exemple affichées sur le dispositif d'affichage 16 sous la forme d'une jauge 60.

La jauge 60 est par exemple vide lorsque l'ensemble de réduction d'énergie mécanique est en configuration inactive et/ou lorsque la commande de l'ensemble de réduction d'énergie mécanique correspond à un pilotage en configuration inactive et pleine lorsque l'ensemble de réduction d'énergie mécanique est en configuration de réduction maximale de l'énergie mécanique et/ou lorsque la commande de l'ensemble de réduction d'énergie mécanique correspond à un pilotage en configuration de réduction maximale de l'énergie mécanique. Elle se remplit progressivement en correspondance avec la configuration et/ou la commande de l'ensemble de réduction d'énergie mécanique entre la configuration inactive et la configuration de réduction maximale de l'énergie mécanique.

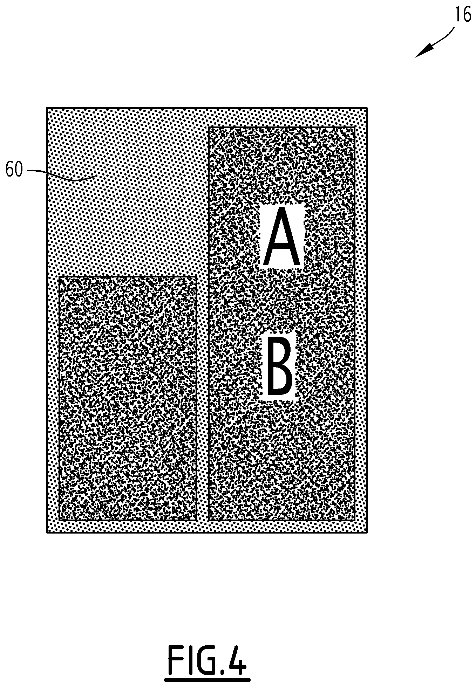

En référence à la figure 4, la jauge 60 est partiellement remplie ce qui traduit, par exemple, que l'ensemble de réduction d'énergie mécanique est dans une configuration intermédiaire entre la configuration inactive et la configuration de réduction maximale de l'énergie mécanique.

Selon une variante non-illustrée, au moins deux jauges 60 distinctes sont affichées sur le dispositif d'affichage 16. Au moins une première jauge 60 concerne la configuration courante de l'ensemble de réduction d'énergie mécanique et au moins une deuxième jauge 60 concerne la commande courante de l'ensemble de réduction d'énergie mécanique.

Selon une autre variante non-illustrée, une seule jauge 60 est affichée sur le dispositif d'affichage 16. Elle se remplit progressivement selon un premier niveau de remplissage en correspondance avec la configuration courante, avec par exemple une première couleur, et selon un deuxième niveau de remplissage en correspondance avec la commande courante, avec par exemple une deuxième couleur. L'unique jauge 60 présente donc deux niveaux de remplissage qui sont égaux lorsque la configuration courante correspond à la commande courante.

Selon encore une autre variante non-illustrée, une seule jauge 60 est affichée sur le dispositif d'affichage 16. L'unique jauge 60 se remplit progressivement en correspondance avec l'une entre la configuration courante et la commande courante de l'ensemble de réduction d'énergie mécanique. Avantageusement, les données relatives à l'autre entre la configuration courante et la commande courante sont affichées sur le dispositif d'affichage 16 sous la forme d'un tiret superposé sur la jauge 60, la position du tiret le long de la jauge 60 correspondant à l'autre entre la configuration courante et la commande courante.

Encore selon une autre variante non-illustrée, une seule jauge 60 est affichée sur le dispositif d'affichage. Les données relatives à l'une entre la configuration courante et la commande courante sont affichées sur le dispositif d'affichage 16 sous la forme d'un premier tiret superposé sur la jauge 60. Les données relatives à l'autre entre la configuration courante et la commande courante sont affichées sur le dispositif d'affichage 16 sous la forme d'un deuxième tiret également superposé sur la jauge 60. La position du premier tiret le long de la jauge 60 correspond à l'une entre la configuration courante et la commande courante et la position du deuxième tiret le long de la jauge 60 correspond à l'autre entre la configuration courante et la commande courante.

Dans ce qui suit, on décrit un procédé de commande de l'ensemble de réduction d'énergie mécanique à l'aide du dispositif de commande 14.

Initialement, le bouton à bascule 38 est placé dans la position de maintien, ce qui maintient la configuration de l'ensemble de réduction d'énergie mécanique.

Pour modifier par incrément la configuration de l'ensemble de réduction d'énergie mécanique vers la configuration de réduction maximale de l'énergie mécanique, le bouton à bascule 38 est placé dans la première position de déplacement incrémental et est maintenu dans cette position. Pour maintenir le bouton à bascule 38 dans la première position de déplacement incrémental, le pilote applique une force d'appui inférieure au seuil de force sur la première surface d'appui 54. Le pilote suit sur le dispositif d'affichage 16 la progression du déplacement de l'ensemble de réduction d'énergie mécanique.

Ainsi, pour par exemple placer l'ensemble de réduction d'énergie mécanique dans une configuration intermédiaire entre la configuration inactive et la configuration de réduction maximale de l'énergie mécanique, le bouton à bascule 38 est maintenu dans la première position de déplacement incrémental pendant une certaine durée jusqu'à ce que l'ensemble de réduction d'énergie mécanique atteigne la configuration souhaitée. En particulier, l'atteinte de la configuration souhaitée est reconnue lorsque les données relatives à la configuration courante de l'ensemble de réduction d'énergie mécanique affichées par le dispositif d'affichage 16 correspondent à la configuration souhaitée. Lorsque la configuration souhaitée est atteinte, le pilote ou le copilote cesse d'appliquer la force d'appui sur la première surface d'appui 54. L'élément de rappel 40 ramène alors le bouton à bascule 38 vers la position de maintien.

En partant de la position de maintien et pour modifier par incrément la configuration de l'ensemble de réduction d'énergie mécanique vers la configuration inactive, le bouton à bascule 38 est placé dans la deuxième position de déplacement incrémental et est maintenu dans cette position. Pour maintenir le bouton à bascule 38 dans la deuxième position de déplacement incrémental, le pilote applique une force d'appui inférieure au seuil de force sur la deuxième surface d'appui 56. Là également, le pilote suit sur le dispositif d'affichage 16 la progression du déplacement de l'ensemble de réduction d'énergie mécanique.

Similairement, pour par exemple placer l'ensemble de réduction d'énergie mécanique dans une configuration intermédiaire entre la configuration inactive et la configuration de réduction maximale de l'énergie mécanique, le bouton à bascule 38 est maintenu dans la deuxième position de déplacement incrémental pendant une certaine durée jusqu'à ce que l'ensemble de réduction d'énergie mécanique atteigne la configuration souhaitée. Lorsque la configuration souhaitée est atteinte, le pilote ou le copilote cesse d'appliquer la force d'appui sur la deuxième surface d'appui 56. L'élément de rappel 40 ramène alors le bouton à bascule 38 vers la position de maintien.

Pour modifier intégralement la configuration de l'ensemble de réduction d'énergie mécanique jusqu'à la configuration de réduction maximale de l'énergie mécanique, le bouton à bascule 38 est, par exemple, placé dans la première position de déplacement intégral. Pour placer le bouton à bascule 38 dans la première position de déplacement intégral, le pilote ou le copilote applique une force d'appui supérieure au seuil de force sur la première surface d'appui 54 pour dépasser la marche d'effort.

Pour modifier intégralement la configuration de l'ensemble de réduction d'énergie mécanique jusqu'à la configuration inactive, le bouton à bascule 38 est, par exemple, placé dans la deuxième position de déplacement intégral. Pour placer le bouton à bascule 38 dans la deuxième position de déplacement intégral, le pilote ou le copilote applique une force d'appui supérieure au seuil de force sur la deuxième surface d'appui 56 pour dépasser la marche d'effort.

Ainsi, pour placer l'ensemble de réduction d'énergie mécanique dans la configuration de réduction maximale de l'énergie mécanique, soit le bouton à bascule 38 est placé dans la première position de déplacement intégral, soit le bouton à bascule 38 est maintenu dans la première position de déplacement incrémental jusqu'à ce que l'ensemble de réduction d'énergie mécanique atteigne la configuration de réduction maximale.

Pour placer l'ensemble de réduction d'énergie mécanique dans la configuration inactive, soit le bouton à bascule 38 est placé dans la deuxième position de déplacement intégral, soit le bouton à bascule 38 est maintenu dans la deuxième position de déplacement incrémental jusqu'à ce que l'ensemble de réduction d'énergie mécanique atteigne la configuration inactive.

Selon une variante non-illustrée, le bouton à bascule 38 est déplaçable entre trois positions seulement, en particulier entre la position de maintien, la première position de déplacement incrémental et la deuxième position de déplacement incrémental.

Selon un autre mode de réalisation dans lequel l'ensemble de réduction d'énergie mécanique comprend plusieurs organes de réduction d'énergie mécanique, chaque organe de réduction d'énergie mécanique est configuré pour être soit dans la position rentrée soit dans la position sortie extrême. Dans une configuration intermédiaire de l'ensemble de réduction d'énergie mécanique, une certaine combinaison d'organes sont en position rentrée et les autres organes sont en position sortie extrême de sorte à atteindre la réduction d'énergie mécanique désirée. Par « par incrément », on entend alors par exemple que les organes de réduction d'énergie mécanique sont déplacés successivement vers la position sortie extrême, respectivement vers la position rentrée tant que le premier interrupteur de déplacement incrémental 44, respectivement le deuxième interrupteur de déplacement incrémental 48, est fermé. La séquence de déplacement successif des organes de réduction d'énergie mécanique (par exemple l'identité des organes déplacés et l'ordre dans lequel ils sont déplacés) vers la position sortie extrême ou vers la position rentrée dépend de plusieurs critères parmi lesquels le confort des passagers, la progressivité de la variation d'énergie mécanique par l'ensemble de réduction d'énergie mécanique et la linéarité de cette variation. Il existe un grand nombre de séquences différentes de déplacement successif des organes. Par exemple, une séquence particulière de déplacement successif des organes est mise en œuvre par la centrale de commande en fonction de son respect d'un critère particulier. Avantageusement, ledit critère est sélectionné par l'intermédiaire d'une interface homme-machine par le personnel navigant technique.

Grâce à l'invention, le pilote et le copilote de l'aéronef peuvent aisément contrôler de manière simultanée la poussée et la traînée de l'aéronef, en manipulant d'une seule main le dispositif 12 de contrôle de l'au moins un moteur de propulsion et le dispositif 14 de commande de l'ensemble de réduction d'énergie mécanique.

Ainsi, deux instruments de contrôle de l'aéronef sont regroupés au sein du cockpit de sorte à faciliter les procédures de vol.

En outre, comme le bouton à bascule 38 est ramené vers la position de maintien depuis les première et deuxième positions de déplacement incrémental, les problèmes d'incohérence entre la configuration actuelle réelle de l'ensemble de réduction d'énergie mécanique et l'information sur cette dite configuration actuelle réelle véhiculée par le dispositif de commande est supprimée. Pour connaître la configuration actuelle réelle de l'ensemble de réduction d'énergie mécanique, le pilote et le copilote se réfèrent au dispositif d'affichage 16.

## Revendications

1. Dispositif de commande (14) d'un ensemble de réduction d'énergie mécanique d'un aéronef, l'ensemble de réduction d'énergie mécanique étant déplaçable entre une configuration inactive et une configuration de réduction maximale de l'énergie mécanique, le dispositif de commande (14) comprenant un bouton à bascule (38) déplaçable entre une position de maintien de la configuration de l'ensemble de réduction d'énergie mécanique, une première position de déplacement incrémental de l'ensemble de réduction d'énergie mécanique vers sa configuration de réduction maximale de l'énergie mécanique et une deuxième position de déplacement incrémental de l'ensemble de réduction d'énergie mécanique vers sa configuration inactive, le dispositif de commande (14) comprenant, en outre, au moins un élément de rappel (40) configuré pour ramener le bouton à bascule (38) vers sa position de maintien.

2. Dispositif de commande (14) selon la revendication 1, dans lequel tant que le bouton à bascule (38) est maintenu dans la première position de déplacement incrémental, le dispositif de commande (14) est propre à poursuivre le déplacement de l'ensemble de réduction d'énergie mécanique de la configuration inactive vers la configuration de réduction maximale de l'énergie mécanique, le relâchement du bouton à bascule (38) provoquant son retour dans la position de maintien et l'immobilisation de l'ensemble de réduction d'énergie mécanique dans sa configuration courante, et dans lequel tant que le bouton à bascule (38) est maintenu dans la deuxième position de déplacement incrémental, le dispositif de commande (14) est propre à poursuivre le déplacement de l'ensemble de réduction d'énergie mécanique de la configuration de réduction maximale de l'énergie mécanique vers la configuration inactive, le relâchement du bouton à bascule (38) provoquant son retour dans la position de maintien et l'immobilisation de l'ensemble de réduction d'énergie mécanique dans sa configuration courante.

3. Dispositif de commande (14) selon la revendication 1 ou 2, dans lequel le bouton à bascule (38) est déplaçable entre la première position de déplacement incrémental et une première position de déplacement intégral de l'ensemble de réduction d'énergie mécanique jusqu'à sa configuration de réduction maximale de l'énergie mécanique, et entre la deuxième position de déplacement incrémental et une deuxième position de déplacement intégral de l'ensemble de réduction d'énergie mécanique jusqu'à sa configuration inactive, la première position de déplacement incrémental étant entre la position de maintien et la première position de déplacement intégral et la deuxième position de déplacement incrémental étant entre la position de maintien et la deuxième position de déplacement intégral.

4. Dispositif de commande (14) selon la revendication 3, comprenant en outre une marche d'effort entre la première position de déplacement incrémental et la première position de déplacement intégral et une marche d'effort entre la deuxième position de déplacement incrémental et la deuxième position de déplacement intégral.

5. Dispositif de commande (14) selon la revendication 3 ou 4, dans lequel la deuxième position de déplacement incrémental, respectivement la deuxième position de déplacement intégral, est symétrique de la première position de déplacement incrémentale, respectivement de la première position de déplacement intégral, par rapport à la position de maintien.

6. Dispositif de commande (14) selon l'une quelconque des revendications précédentes, comprenant un interrupteur de neutre (42) configuré pour être ouvert lorsque le bouton à bascule (38) occupe la position de maintien et configuré pour être fermé lorsque le bouton à bascule (38) occupe une position différente de la position de maintien.

7. Dispositif de commande (14) selon la revendication 6 lorsque prise en combinaison avec l'une quelconque des revendications 3 à 5, comprenant un premier interrupteur de déplacement incrémental (44), un premier interrupteur de déplacement intégral (46), un deuxième interrupteur de déplacement incrémental (48) et un deuxième interrupteur de déplacement intégral (50), configurés de sorte que :
- le premier interrupteur de déplacement incrémental (44) est configuré pour être fermé dans la première position de déplacement incrémental et dans la première position de déplacement intégral et ouvert sinon ;
- le premier interrupteur de déplacement intégral (46) est configuré pour être fermé dans la première position de déplacement intégral et ouvert sinon ;
- le deuxième interrupteur de déplacement incrémental (48) est configuré pour être fermé dans la deuxième position de déplacement incrémental et dans la deuxième position de déplacement intégral et ouvert sinon ;
- le deuxième interrupteur de déplacement intégral (50) est configuré pour être fermé dans la deuxième position de déplacement intégral et ouvert sinon.

8. Système de pilotage (10) comprenant un dispositif de commande (14) selon l'une quelconque des revendications précédentes et un dispositif de contrôle (12) d'au moins un moteur de propulsion de l'aéronef, le bouton à bascule (38) du dispositif de commande (14) étant disposé sur le dispositif (12) de contrôle d'au moins un moteur de l'aéronef.

9. Système de pilotage (10) selon la revendication 8, dans lequel le dispositif de contrôle (12) comprend une manette (22), la manette (22) comprenant un élément de préhension (30) comportant une surface de préhension (32) destinée à être en contact d'une paume de la main d'un pilote et deux surfaces latérales (34) opposées s'étendant de part et d'autre de la surface de préhension (32) et orthogonalement à la surface de préhension (32), le bouton à bascule (38) étant disposé sur une surface latérale (34) de sorte à être accessible par un pouce du pilote.

10. Système de pilotage (10) selon la revendication 9, dans lequel le dispositif de commande (14) comprend un bouton à bascule auxiliaire identique au bouton à bascule (38) et un élément de rappel auxiliaire identique à l'élément de rappel (40), le bouton à bascule auxiliaire étant disposé sur la surface latérale (34) opposée à la surface latérale (34) sur laquelle est disposé le bouton à bascule (38), de sorte à être accessible par un pouce d'un copilote.

11. Système de pilotage (10) selon la revendication 10, dans lequel le dispositif de commande (14) comprend une casquette de protection (52) faisant saillie latéralement par rapport à la surface latérale (34) et s'étendant au moins en partie autour du bouton à bascule (38), et une casquette (52) faisant saillie latéralement par rapport à la surface latérale (34) opposée et s'étendant au moins en partie autour du bouton à bascule auxiliaire.

12. Système de pilotage (10) selon l'une quelconque des revendications 8 à 11, comprenant, en outre, un dispositif d'affichage (16) configuré pour afficher, à destination d'un pilote, des données relatives à la configuration courante de l'ensemble de réduction d'énergie mécanique et/ou des données relatives à la commande courante de l'ensemble de réduction d'énergie mécanique.

13. Aéronef comprenant un dispositif de commande (14) selon l'une quelconque des revendications 1 à 7 et un ensemble de réduction d'énergie mécanique de l'aéronef déplaçable entre une configuration inactive et une configuration de réduction maximale de l'énergie mécanique, la configuration de l'ensemble de réduction d'énergie mécanique étant :
- maintenue en l'état dans la position de maintien du bouton à bascule (38),
- modifiée par incrément vers la configuration de réduction maximale de l'énergie mécanique tant que le bouton à bascule (38) est maintenu dans la première position de déplacement incrémental, et
- modifiée par incrément vers la configuration inactive tant que le bouton à bascule (38) est maintenu dans la deuxième position de déplacement incrémental.

14. Procédé de commande d'un ensemble de réduction d'énergie mécanique d'un aéronef à l'aide d'un dispositif de commande (14) selon l'une quelconque des revendications 1 à 7, le procédé comprenant :
- un placement du bouton à bascule (38) dans la position de maintien pour maintenir en l'état la configuration de l'ensemble de réduction d'énergie mécanique,
- un maintien du bouton à bascule (38) dans la première position de déplacement incrémental pour modifier progressivement la configuration de l'ensemble de réduction d'énergie mécanique vers la configuration de réduction maximale de l'énergie mécanique, et un relâchement du bouton à bascule (38) pour immobiliser l'ensemble de réduction d'énergie mécanique dans sa configuration courante ; puis éventuellement,
- un maintien du bouton à bascule (38) dans la deuxième position de déplacement incrémental pour modifier progressivement la configuration de l'ensemble de réduction d'énergie mécanique vers la configuration inactive, et un relâchement du bouton à bascule (38) pour immobiliser l'ensemble de réduction d'énergie mécanique dans sa configuration courante.

15. Procédé de commande selon la revendication 14, dans lequel le bouton à bascule (38) est déplaçable entre la première position de déplacement incrémental et une première position de déplacement intégral de l'ensemble de réduction d'énergie mécanique jusqu'à sa configuration de réduction maximale de l'énergie mécanique, et entre la deuxième position de déplacement incrémental et une deuxième position de déplacement intégral de l'ensemble de réduction d'énergie mécanique jusqu'à sa configuration inactive, le procédé comprenant :
- un placement du bouton à bascule (38) dans la première position de déplacement intégral pour modifier la configuration de l'ensemble de réduction d'énergie mécanique jusqu'à la configuration de réduction maximale de l'énergie mécanique ; puis éventuellement,
- un placement du bouton à bascule (38) dans la deuxième position de déplacement intégral pour modifier la configuration de l'ensemble de réduction d'énergie mécanique jusqu'à la configuration inactive.

16. Procédé selon la revendication 14 ou 15, dans lequel une configuration intermédiaire entre la configuration inactive et la configuration de réduction maximale de l'énergie mécanique est atteignable lorsque le bouton à bascule (38) est placé sur la première position de déplacement incrémentale ou la deuxième position de déplacement incrémental.

## Patentansprüche

1. Steuervorrichtung (14) für eine Anordnung zur Verringerung mechanischer Energie eines Luftfahrzeugs, wobei die Anordnung zur Verringerung mechanischer Energie zwischen einer inaktiven Konfiguration und einer Konfiguration maximaler Verringerung der mechanischen Energie bewegbar ist, wobei die Steuervorrichtung (14) einen Kippschalter (38) umfasst, der zwischen einer Halteposition der Konfiguration der Anordnung zur Verringerung mechanischer Energie, einer ersten Position für eine inkrementelle Bewegung der Anordnung zur Verringerung mechanischer Energie zu ihrer Konfiguration maximaler Verringerung der mechanischen Energie und einer zweiten Position für eine inkrementelle Bewegung der Anordnung zur Verringerung mechanischer Energie zu ihrer inaktiven Konfiguration bewegbar ist, wobei die Steuervorrichtung (14) ferner wenigstens ein Rückstellelement (40) umfasst, das ausgebildet ist, den Kippschalter (38) zu seiner Halteposition zurückzuführen.

2. Steuervorrichtung (14) nach Anspruch 1, wobei, solange der Kippschalter (38) in der ersten Position für eine inkrementelle Bewegung gehalten wird, die Steuervorrichtung (14) dazu geeignet ist, die Bewegung der Anordnung zur Verringerung mechanischer Energie von der inaktiven Konfiguration zu der Konfiguration maximaler Verringerung der mechanischen Energie fortzusetzen, wobei das Loslassen des Kippschalters (38) dessen Rückkehr in die Halteposition und die Festsetzung der Anordnung zur Verringerung mechanischer Energie in ihrer aktuellen Konfiguration bewirkt, und wobei, solange der Kippschalter (38) in der zweiten Position für eine inkrementelle Bewegung gehalten wird, die Steuervorrichtung (14) dazu geeignet ist, die Bewegung der Anordnung zur Verringerung mechanischer Energie von der Konfiguration maximaler Verringerung der mechanischen Energie zu der inaktiven Konfiguration fortzusetzen, wobei das Loslassen des Kippschalters (38) dessen Rückkehr in die Halteposition und die Festsetzung der Anordnung zur Verringerung mechanischer Energie in ihrer aktuellen Konfiguration bewirkt.

3. Steuervorrichtung (14) nach Anspruch 1 oder 2, wobei der Kippschalter (38) zwischen der ersten Position für eine inkrementelle Bewegung und einer ersten Position für eine vollständige Bewegung der Anordnung zur Verringerung mechanischer Energie bis zu ihrer Konfiguration maximaler Verringerung der mechanischen Energie, und zwischen der zweiten Position für eine inkrementelle Bewegung und einer zweiten Position für eine vollständige Bewegung der Anordnung zur Verringerung mechanischer Energie bis zu ihrer inaktiven Konfiguration bewegbar ist, wobei die erste Position für eine inkrementelle Bewegung zwischen der Halteposition und der ersten Position für eine vollständige Bewegung liegt und die zweite Position für eine inkrementelle Bewegung zwischen der Halteposition und der zweiten Position für eine vollständige Bewegung liegt.

4. Steuervorrichtung (14) nach Anspruch 3, ferner umfassend eine Kraftstufe zwischen der ersten Position für eine inkrementelle Bewegung und der ersten Position für eine vollständige Bewegung sowie eine Kraftstufe zwischen der zweiten Position für eine inkrementelle Bewegung und der zweiten Position für eine vollständige Bewegung.

5. Steuervorrichtung (14) nach Anspruch 3 oder 4, wobei die zweite Position für eine inkrementelle Bewegung beziehungsweise die zweite Position für eine vollständige Bewegung bezüglich der Halteposition symmetrisch zu der ersten Position für eine inkrementelle Bewegung beziehungsweise zu der ersten Position für eine vollständige Bewegung ist.

6. Steuervorrichtung (14) nach einem der vorhergehenden Ansprüche, umfassend einen Neutralschalter (42), der ausgebildet ist, geöffnet zu sein, wenn der Kippschalter (38) die Halteposition einnimmt, und der ausgebildet ist, geschlossen zu sein, wenn der Kippschalter (38) eine von der Halteposition verschiedene Position einnimmt.

7. Steuervorrichtung (14) nach Anspruch 6, wenn in Kombination mit einem der Ansprüche 3 bis 5 genommen, umfassend einen ersten Schalter für eine inkrementelle Bewegung (44), einen ersten Schalter für eine vollständige Bewegung (46), einen zweiten Schalter für eine inkrementelle Bewegung (48) und einen zweiten Schalter für eine vollständige Bewegung (50), die derart ausgebildet sind, dass:
- der erste Schalter für eine inkrementelle Bewegung (44) ausgebildet ist, in der ersten Position für eine inkrementelle Bewegung und in der ersten Position für eine vollständige Bewegung geschlossen und andernfalls geöffnet zu sein;
- der erste Schalter für eine vollständige Bewegung (46) ausgebildet ist, in der ersten Position für eine vollständige Bewegung geschlossen und andernfalls geöffnet zu sein;
- der zweite Schalter für eine inkrementelle Bewegung (48) ausgebildet ist, in der zweiten Position für eine inkrementelle Bewegung und in der zweiten Position für eine vollständige Bewegung geschlossen und andernfalls geöffnet zu sein;
- der zweite Schalter für eine vollständige Bewegung (50) ausgebildet ist, in der zweiten Position für eine vollständige Bewegung geschlossen und andernfalls geöffnet zu sein.

8. Flugsteuerungssystem (10), umfassend eine Steuervorrichtung (14) nach einem der vorhergehenden Ansprüche und eine Steuervorrichtung (12) für wenigstens einen Antriebsmotor des Luftfahrzeugs, wobei der Kippschalter (38) der Steuervorrichtung (14) an der Vorrichtung (12) zur Steuerung wenigstens eines Motors des Luftfahrzeugs angeordnet ist.

9. Flugsteuerungssystem (10) nach Anspruch 8, wobei die Steuervorrichtung (12) einen Hebel (22) umfasst, wobei der Hebel (22) ein Greifelement (30) umfasst, das eine Greiffläche (32), die dazu bestimmt ist, mit einer Handfläche eines Piloten in Kontakt zu sein, und zwei entgegengesetzte Seitenflächen (34) aufweist, die sich beiderseits der Greiffläche (32) und orthogonal zu der Greiffläche (32) erstrecken, wobei der Kippschalter (38) auf einer Seitenfläche (34) angeordnet ist, sodass er durch einen Daumen des Piloten zugänglich ist.

10. Flugsteuerungssystem (10) nach Anspruch 9, wobei die Steuervorrichtung (14) einen Hilfskippschalter, der mit dem Kippschalter (38) identisch ist, und ein Hilfsrückstellelement, das mit dem Rückstellelement (40) identisch ist, umfasst, wobei der Hilfskippschalter auf der Seitenfläche (34) angeordnet ist, die der Seitenfläche (34), auf welcher der Kippschalter (38) angeordnet ist, entgegengesetzt ist, sodass er durch einen Daumen eines Copiloten zugänglich ist.

11. Flugsteuerungssystem (10) nach Anspruch 10, wobei die Steuervorrichtung (14) eine Schutzhaube (52), die bezüglich der Seitenfläche (34) seitlich vorsteht und sich wenigstens teilweise um den Kippschalter (38) herum erstreckt, und eine Haube (52) umfasst, die bezüglich der entgegengesetzten Seitenfläche (34) seitlich vorsteht und sich wenigstens teilweise um den Hilfskippschalter herum erstreckt.

12. Flugsteuerungssystem (10) nach einem der Ansprüche 8 bis 11, ferner umfassend eine Anzeigevorrichtung (16), die ausgebildet ist, für einen Piloten Daten bezüglich der aktuellen Konfiguration der Anordnung zur Verringerung mechanischer Energie und/oder Daten bezüglich der aktuellen Steuerung der Anordnung zur Verringerung mechanischer Energie anzuzeigen.

13. Luftfahrzeug, umfassend eine Steuervorrichtung (14) nach einem der Ansprüche 1 bis 7 und eine Anordnung zur Verringerung mechanischer Energie des Luftfahrzeugs, die zwischen einer inaktiven Konfiguration und einer Konfiguration maximaler Verringerung der mechanischen Energie bewegbar ist, wobei die Konfiguration der Anordnung zur Verringerung mechanischer Energie:
- in der Halteposition des Kippschalters (38) unverändert gehalten wird,
- inkrementell zu der Konfiguration maximaler Verringerung der mechanischen Energie verändert wird, solange der Kippschalter (38) in der ersten Position für eine inkrementelle Bewegung gehalten wird, und
- inkrementell zu der inaktiven Konfiguration verändert wird, solange der Kippschalter (38) in der zweiten Position für eine inkrementelle Bewegung gehalten wird.

14. Verfahren zur Steuerung einer Anordnung zur Verringerung mechanischer Energie eines Luftfahrzeugs mithilfe einer Steuervorrichtung (14) nach einem der Ansprüche 1 bis 7, wobei das Verfahren umfasst:
- ein Bringen des Kippschalters (38) in die Halteposition, um die Konfiguration der Anordnung zur Verringerung mechanischer Energie unverändert zu halten,
- ein Halten des Kippschalters (38) in der ersten Position für eine inkrementelle Bewegung, um die Konfiguration der Anordnung zur Verringerung mechanischer Energie schrittweise zu der Konfiguration maximaler Verringerung der mechanischen Energie zu verändern, und ein Loslassen des Kippschalters (38), um die Anordnung zur Verringerung mechanischer Energie in ihrer aktuellen Konfiguration festzusetzen; anschließend gegebenenfalls,
- ein Halten des Kippschalters (38) in der zweiten Position für eine inkrementelle Bewegung, um die Konfiguration der Anordnung zur Verringerung mechanischer Energie schrittweise zu der inaktiven Konfiguration zu verändern, und ein Loslassen des Kippschalters (38), um die Anordnung zur Verringerung mechanischer Energie in ihrer aktuellen Konfiguration festzusetzen.

15. Steuerverfahren nach Anspruch 14, wobei der Kippschalter (38) zwischen der ersten Position für eine inkrementelle Bewegung und einer ersten Position für eine vollständige Bewegung der Anordnung zur Verringerung mechanischer Energie bis zu ihrer Konfiguration maximaler Verringerung der mechanischen Energie, und zwischen der zweiten Position für eine inkrementelle Bewegung und einer zweiten Position für eine vollständige Bewegung der Anordnung zur Verringerung mechanischer Energie bis zu ihrer inaktiven Konfiguration bewegbar ist, wobei das Verfahren umfasst:
- ein Bringen des Kippschalters (38) in die erste Position für eine vollständige Bewegung, um die Konfiguration der Anordnung zur Verringerung mechanischer Energie bis zu der Konfiguration maximaler Verringerung der mechanischen Energie zu verändern; anschließend gegebenenfalls,
- ein Bringen des Kippschalters (38) in die zweite Position für eine vollständige Bewegung, um die Konfiguration der Anordnung zur Verringerung mechanischer Energie bis zu der inaktiven Konfiguration zu verändern.

16. Verfahren nach Anspruch 14 oder 15, wobei eine Zwischenkonfiguration zwischen der inaktiven Konfiguration und der Konfiguration maximaler Verringerung der mechanischen Energie erreichbar ist, wenn der Kippschalter (38) in die erste Position für eine inkrementelle Bewegung oder die zweite Position für eine inkrementelle Bewegung gebracht wird.

## Claims

1. A command device (14) for controlling a mechanical energy reduction assembly of an aircraft, the mechanical energy reduction assembly being movable between an inactive configuration and a maximum mechanical energy reduction configuration, the command device (14) comprising a rocker button (38) movable between a maintaining position for maintaining the configuration of the mechanical energy reduction assembly, a first incremental movement position of incremental movement of the mechanical energy reduction assembly towards its maximum mechanical energy reduction configuration and a second incremental movement position of incremental movement of the mechanical energy reduction assembly towards its inactive configuration, the command device (14) further comprising at least one return element (40) configured to return the rocker button (38) towards its maintaining position.

2. The command device (14) according to claim 1, wherein, while the rocker button (38) is held in the first incremental movement position, the command device (14) is adapted to continue moving the mechanical energy reduction assembly from the inactive configuration towards the maximum mechanical energy reduction configuration, with the release of the rocker button (38) causing it to return to the maintaining position and the immobilization of the mechanical energy reduction assembly in its current configuration, and wherein, while the rocker button (38) is held in the second incremental movement position, the command device (14) is adapted to continue moving the mechanical energy reduction assembly from the maximum mechanical energy reduction configuration towards the inactive configuration, with the release of the rocker button (38) causing it to return to the maintaining position and the immobilization of the mechanical energy reduction assembly in its current configuration.

3. The command device (14) according to claim 1 or 2, wherein the rocker button (38) is movable between the first incremental movement position and a first full movement position of full movement of the mechanical energy reduction assembly to its maximum mechanical energy reduction configuration, and between the second incremental movement position and a second full movement position of full movement of the mechanical energy reduction assembly to its inactive configuration, the first incremental movement position being between the maintaining position and the first full movement position and the second incremental movement position being between the maintaining position and the second full movement position.

4. The command device (14) according to claim 3, further comprising one effort step between the first incremental movement position and the first full movement position, and one effort step between the second incremental movement position and the second full movement position.

5. The command device (14) according to claim 3 or 4, wherein the second incremental movement position, respectively the second full movement position, is symmetrical to the first incremental movement position, respectively to the first full movement position, in relation to the maintaining position.

6. The command device (14) according to any one of the preceding claims, comprising a neutral switch (42) configured to be opened when the rocker button (38) occupies the maintaining position and configured to be closed when the rocker button (38) occupies a position other than the maintaining position.

7. The command device (14) according to claim 6 when taken in combination with any of claims 3 to 5, comprising a first incremental movement switch (44), a first full movement switch (46), a second incremental movement switch (48), and a second full movement switch (50), configured such that:
- the first incremental movement switch (44) is configured to be closed in the first incremental movement position and in the first full movement position and open otherwise;
- the first full movement switch (46) is configured to be closed in the first full movement position and open otherwise;
- the second incremental movement switch (48) is configured to be closed in the second incremental movement position and in the second full movement position and open otherwise;
- the second full movement switch (50) is configured to be closed in the second full movement position and open otherwise.

8. A piloting system (10) comprising a command device (14) according to any one of the preceding claims and a control device (12) for controlling at least one aircraft propulsion engine, the rocker button (38) of the command device (14) being arranged on the control device (12).

9. The piloting system (10) according to claim 8, wherein the control device (12) comprises a lever (22), the lever (22) comprising a gripping element (30) having a gripping surface (32) intended to be in contact with the palm of a hand of a pilot and two opposite side surfaces (34) extending on either side of the gripping surface (32) and orthogonally to the gripping surface (32), the rocker button (38) being arranged on one side surface (34) so as to be accessible by a thumb of the pilot.

10. The piloting system (10) according to claim 9, wherein the command device (14) comprises an auxiliary rocker button identical to the rocker button (38) and an auxiliary return element identical to the return element (40), the auxiliary rocker button being arranged on the side surface (34) opposite the side surface (34) on which the rocker button (38) is arranged, so as to be accessible by a co-pilot's thumb.

11. The piloting system (10) according to claim 10, wherein the command device (14) comprises a protective cap (52) projecting laterally from the side surface (34) and extending at least partially around the rocker button (38), and a cap (52) projecting laterally from the opposite side surface (34) and extending at least partially around the auxiliary rocker button.

12. The piloting system (10) according to any one of claims 8 to 11, further comprising a display device (16) configured to display data relating to the current configuration of the mechanical energy reduction assembly and/or data relating to the current command of the mechanical energy reduction assembly to a pilot.

13. An aircraft comprising a command device (14) according to any one of claims 1 to 7 and an aircraft mechanical energy reduction assembly movable between an inactive configuration and a maximum mechanical energy reduction configuration, the mechanical energy reduction assembly configuration being:
- maintained as is, in the maintaining position of the rocker button (38),
- incrementally modified, towards the maximum mechanical energy reduction configuration, while the rocker button (38) is held in the first incremental movement position, and
- incrementally modified, towards the inactive configuration while the rocker button (38) is held in the second incremental movement position.

14. A method of controlling a mechanical energy reduction assembly of an aircraft using a command device (14) according to any of claims 1 to 7, the method comprising:
- placing the rocker button (38) in the maintaining position, to maintain the configuration of the mechanical energy reduction assembly as is,
- holding the rocker button (38) in the first incremental movement position, to incrementally modify the configuration of the mechanical energy reduction assembly towards the maximum mechanical energy reduction configuration, and releasing the rocker button (38), to immobilize the mechanical energy reduction assembly in its current configuration; and then, optionally,
- holding the rocker button (38) in the second incremental movement position, to incrementally modify the configuration of the mechanical energy reduction assembly towards the inactive configuration, and releasing the rocker button (38) to immobilize the mechanical energy reduction assembly in its current configuration.

15. The control method according to claim 14, wherein the rocker button (38) is movable between the first incremental movement position and a first full movement position of full movement of the mechanical energy reduction assembly to its maximum mechanical energy reduction configuration, and between the second incremental movement position and a second full movement position of full movement of the mechanical energy reduction assembly to its inactive configuration, the method comprising:
- placing the rocker button (38) in the first full movement position to modify the configuration of the mechanical energy reduction assembly to the maximum mechanical energy reduction configuration; and then, optionally,
- placing the rocker button (38) in the second full movement position to modify the configuration of the mechanical energy reduction assembly to the inactive configuration.

16. The method according to claim 14 or 15, wherein an intermediate configuration between the inactive configuration and the maximum mechanical energy reduction configuration is achievable when the rocker button (38) is placed in the first incremental movement position or the second incremental movement position.
